# EUROPÄISCHE PATENTSCHRIFT

(11) **EP 3 718 202 B1**
(45) Veröffentlichungstag und Bekanntmachung des Hinweises auf die Patenterteilung: **12.07.2023**
(21) Anmeldenummer: 18789620.4
(22) Anmeldetag: 18.10.2018
(51) Int. Cl.: H02P 9/14

(54) **VERFAHREN ZUM BETREIBEN EINER ANTRIEBSEINRICHTUNG FÜR EIN KRAFTFAHRZEUG SOWIE ENTSPRECHENDE ANTRIEBSEINRICHTUNG FÜR EIN KRAFTFAHRZEUG**
METHOD FOR OPERATING A DRIVE DEVICE FOR A MOTOR VEHICLE, AND CORRESPONDING DRIVE DEVICE FOR A MOTOR VEHICLE
PROCÉDÉ DE FONCTIONNEMENT D'UN SYSTÈME D'ENTRAÎNEMENT POUR UN VÉHICULE MOTORISÉ AINSI QUE SYSTÈME D'ENTRAÎNEMENT CORRESPONDANT POUR UN VÉHICULE MOTORISÉ

(30) Priorität: 29.11.2017 DE 102017221386
(43) Veröffentlichungstag der Anmeldung: 07.10.2020
(73) Patentinhaber: Audi AG, 85045 Ingolstadt (DE)
(72) Erfinder: STRASSER, Roman, 85080 Gaimersheim (DE)
(86) Internationale Anmeldenummer: PCT/EP2018/078585
(87) Internationale Veröffentlichungsnummer: WO 2019/105650

(56) Entgegenhaltungen:
- EP-A1- 2 911 288
- JP-A- 2005 127 280
- US-A- 5 502 368
- US-A- 5 966 299
- US-A1- 2009 058 373
- US-B1- 6 704 214

## Beschreibung

Die Erfindung betrifft ein Verfahren zum Betreiben einer Antriebseinrichtung für ein Kraftfahrzeug, wobei die Antriebseinrichtung eine fremderregte elektrische Synchronmaschine zum Bereitstellen eines Antriebsdrehmoments aufweist und zum Erzeugen eines Erregerfelds eine elektrische Spannung an einer Erregerwicklung der Synchronmaschine angelegt wird, wobei zum Aufbauen des Erregerfelds die an der Erregerwicklung angelegte Spannung zeitweise größer gewählt wird als eine Sollspannung und nach dem Aufbauen des Erregerfelds die Spannung in Richtung der Sollspannung abgesenkt wird, wobei die größer gewählte Spannung mittels eines Spannungswandler bereitgestellt wird. Die Erfindung betrifft weiterhin eine Antriebseinrichtung für ein Kraftfahrzeug.

Aus dem Stand der Technik ist beispielsweise die Druckschrift US 2009/0058373 A1 bekannt. Diese beschreibt eine Steuerschaltung für einen Generator, mit einer ersten aktiven Schalteinrichtung, die dazu ausgebildet ist einen ersten Anschluss einer Anregungsspule entweder mit einem ersten oder einem zweiten Anschluss einer Spannungsquelle zu verbinden, einer zweiten aktiven Schalteinrichtung, die dazu ausgebildet ist, einen zweiten Anschluss der Anregungsspule entweder mit dem ersten oder dem zweiten Anschluss der Spannungsquelle zu verbinden, und einer Generatorsteuerung zum Einstellen eines Tastverhältnisses der aktiven Schalteinrichtung, um den durch die Anregungsspule fließenden Strom rasch auf einen Anregungsspulenstromsollwert einzustellen.

Die Druckschrift JP 2005 127280 A beschreibt eine Startvorrichtung für eine Brennkraftmaschine, mit einem elektrischen Motor zum Starten der Brennkraftmaschine, wobei der elektrische Motor eine Feldspule und eine Ankerspule aufweist und dazu ausgebildet ist ein Drehmoment an die Brennkraftmaschine zu übertragen, einer ersten Speicherbatterie, die zum Bereitstellen eines Ankerstroms an der Ankerspule abgeschlossen ist, und einer zweiten Speicherbatterie, die zum Bereitstellen eines Anregungsstroms an der Feldspule angeschlossen ist. Dabei sind die erste Speicherbatterie und die zweite Speicherbatterie unabhängig voneinander an die Ankerspule beziehungsweise die Feldspule angeschlossen. Hierdurch wird die Spannung der zweiten Speicherbatterie nicht verringert, wenn die Spannung der ersten Speicherbatterie verringert wird, und es kann ein ausreichender Feldfluss erreicht werden.

Aus dem Stand der Technik ist weiterhin die Druckschrift DE 2 016 550 A bekannt. Diese betrifft ein Verfahren zum Betrieb eines Hysteresis-Motors, bei welchem Vorrichtungen zur Erzeugung kurzfristiger überhöhter Speisespannung (Spannungswischer) vorgesehen sind.

Weiterhin beschreibt die Druckschrift DE 2 310 937 A eine Schaltungsanordnung zum verlustarmen Ansteuern von Schrittmotoren, bestehend aus mehreren, je einer Motorwicklung zugeordneten und mit Rechteckimpulsfolgen angesteuerten Verstärkungssystemen, je einem Zeitglied, mit dessen Hilfe an die jeweilige Motorwicklung kurzzeitig eine gegenüber der Nennspannung überhöhte Spannung zuschaltbar ist und einem Energieabbausystem, welches die Endmagnetisierungsenergie aufnimmt, wobei jedes Verstärkungssystem in Form zweier paralleler, gemeinsam mit der Motorwicklung in Reihe geschalteter Verstärker ausgebildet ist.

Dabei ist vorgesehen, dass der erste Verstärker durch eine Spannungsgegenkopplung die Nennspannung der Motorwicklung ausschließlich im statischen Betrieb konstant hält und der zweite Verstärker mittels des Zeitgliedes als Stellglied einer an sich bekannten Steuer- oder Regeleinrichtung wirkt, wobei die Ablaufzeit des Zeitgliedes durch eine veränderliche Spannung in definierter Weise einstellbar ist, und dass weiterhin das Energieabbausystem aus einem mit den Motorwicklungen über ein ODER-Glied verbundenen parallel liegenden Kondensator besteht, welcher die Entmagnetisierungsenergie entweder an einen Entladewiderstand oder an einen Netzkondensator abgibt.

Es ist Aufgabe der Erfindung, ein Verfahren zum Betreiben einer Antriebseinrichtung für ein Kraftfahrzeug vorzuschlagen, welches gegenüber bekannten Verfahren Vorteile aufweist, insbesondere ein rasches Ansprechen der Antriebseinrichtung auf Änderungen des Betriebszustands sicherstellt.

Dies wird erfindungsgemäß mit einem Verfahren zum Betreiben einer Antriebseinrichtung für ein Kraftfahrzeug mit den Merkmalen des Anspruchs 1 erreicht. Dabei ist vorgesehen, dass die Sollspannung einer Quellenspannung entspricht.

Grundsätzlich ist vorgesehen, dass zum Aufbauen des Erregerfelds die an der Erregerwicklung angelegte Spannung zeitweise größer gewählt wird als eine Sollspannung und nach dem Aufbauen des Erregerfelds die Spannung in Richtung der Sollspannung abgesenkt wird.

Die Antriebseinrichtung dient vorzugsweise dem Antreiben des Kraftfahrzeugs und insoweit dem Bereitstellen eines auf das Antreiben des Kraftfahrzeugs gerichteten Antriebsdrehmoments. Unter dem Antriebsdrehmoment ist sowohl ein positives Drehmoment als auch ein negatives Drehmoment zu verstehen, wobei ersteres auf eine Beschleunigung und letzteres auf eine Verzögerung des Kraftfahrzeugs gerichtet ist. Zum Bereitstellen des Antriebsdrehmoments verfügt die Antriebseinrichtung über eine elektrische Maschine, nämlich die fremderregte elektrische Synchronmaschine. Bei einer solchen läuft ein Rotor synchron mit einem Drehfeld, welches mittels eines Stators erzeugt wird. Dem elektromagnetischen Drehfeld des Stators steht ein elektromagnetisches Feld des Rotors gegenüber, welches für die fremderregte Synchronmaschine mittels der Erregerwicklung erzeugt wird. Die Erregerwicklung ist insoweit dem Rotor zugeordnet beziehungsweise Bestandteil des Rotors.

Zum Erzeugen des Erregerfelds wird an der Erregerwicklung die elektrische Spannung angelegt. Hierauf beginnt sich das Erregerfeld aufzubauen. Die Geschwindigkeit des Aufbaus ist jedoch durch die Induktivität der Erregerwicklung beschränkt. Je höher die Induktivität der Erregerwicklung ist, umso stärker läuft die Stromstärke des durch die Erregerwicklung fließenden elektrischen Stroms der elektrischen Spannung hinterher. Eine hohe Induktivität verlangsamt insoweit den Stromaufbau in der Erregerwicklung und mithin auch den Aufbau des Erregerfelds deutlich.

Dies gilt analog auch für einen Abbau des Erregerfelds bei einem Entfall der elektrischen Spannung, also einem Stromlosschalten der Erregerwicklung. Auch hier baut sich die Stromstärke beziehungsweise das Erregerfeld umso langsamer ab, je höher die Induktivität der Erregerwicklung ist. Das bedeutet schlussendlich jedoch auch, dass das Bereitstellen des Antriebsdrehmoments in Abhängigkeit von der Größe der Induktivität verzögert wird, sodass das Ansprechverhalten der Antriebseinrichtung umso schlechter ist, je größer die Induktivität ist.

Aus diesem Grund ist es vorgesehen, zum Aufbauen des Erregerfelds die an der Erregerwicklung angelegte Spannung zeitweise größer zu wählen als die Sollspannung der Erregerwicklung. Unter dem Aufbauen des Erregerfelds ist zunächst ganz allgemein ein Verstärken beziehungsweise Erhöhen des Erregerfelds zu verstehen. Beispielsweise liegt vor dem Aufbauen des Erregerfelds keine elektrische Spannung an der Erregerwicklung an, sodass in anderen Worten eine elektrische Spannung von 0 Volt vorliegt. Zum Aufbauen des Erregerfelds wird nun eine von 0 Volt verschiedene elektrische Spannung an der Erregerwicklung angelegt, sodass sich das Erregerfeld beginnt aufzubauen.

Zum Aufbauen des Erregerfelds wird eine elektrische Spannung an der Erregerwicklung angelegt, welche größer ist als die Sollspannung. Die Sollspannung kann gleich einer Nennspannung der elektrischen Maschine sein. Unter der Nennspannung ist diejenige elektrische Spannung zu verstehen, welche während eines bestimmungsgemäßen Betriebs der Synchronmaschine an der Erregerwicklung angelegt wird, insbesondere während eines Dauerbetriebs der Synchronmaschine. Die Nennspannung entspricht insoweit vorzugsweise einer elektrischen Spannung, welche während des bestimmungsgemäßen Betriebs der Synchronmaschine dauerhaft an der Erregerwicklung anliegen kann beziehungsweise darf. Im Falle des Boostbetriebs entspricht die Sollspannung einer Boostspannung, die größer ist als die dauerhaft anlegbare Nennspannung. In jedem Fall ist die Sollspannung derart gewählt, dass die elektrische Maschine bestimmungsgemäß und beschädigungsfrei betrieben wird.

Unter der Sollspannung ist in jedem Fall diejenige Spannung zu verstehen, bei welcher die elektrische Maschine nach dem Aufbauen des Erregerfelds betrieben werden soll, zumindest über einen bestimmten Zeitraum. Die Sollspannung entspricht also beispielsweise der Nennspannung der elektrischen Maschine, kann aber auch gleich der Boostspannung sein, die größer ist als die Nennspannung.

Üblicherweise kann bei Anliegen der Sollspannung an der Erregerwicklung ein Solldrehmoment der Synchronmaschine erzielt werden, nämlich durch entsprechendes Bereitstellen des Drehfelds mittels des Stators. Währen des bestimmungsgemäßen Betriebs der Synchronmaschine ist die an der Erregerwicklung angelegte Spannung nach dem Aufbauen des Erregerfelds üblicherweise konstant und entspricht der Sollspannung, nämlich bevorzugt bis zum Abschalten der Synchronmaschine oder zumindest bis zu einem Beginn des Abbauens des Erregerfelds.

Durch das Anlegen der elektrischen Spannung an der Erregerwicklung, die größer ist als die Sollspannung, wird die Stromstärke des durch die Erregerwicklung fließenden elektrischen Stroms schneller erhöht als bei Anlegen der Sollspannung. Entsprechend wird auch das magnetische Feld beziehungsweise dessen magnetische Feldstärke schneller aufgebaut, sodass sich ein verbessertes Ansprechverhalten der Synchronmaschine und mithin der Antriebseinrichtung ergibt. Nach dem Aufbauen des Erregerfelds wird die Spannung in Richtung der Sollspannung abgesenkt, insbesondere bis auf die Sollspannung.

Zusätzlich oder alternativ kann ein analoges Verfahren für das Abbauen des Erregerfelds vorgesehen sein. In anderen Worten wird zum Abbauen des Erregerfelds die an der Erregerwicklung anliegende elektrische Spannung nicht lediglich auf 0 Volt abgesenkt, sondern mit anderem Vorzeichen an ihr angelegt. Das bedeutet schlussendlich, dass die Erregerwicklung zum Abbauen des Erregerfelds umgepolt wird, zumindest zeitweise. Auf diese Art und Weise wird die Stromstärke des durch die Erregerwicklung fließenden elektrischen Stroms besonders rasch abgebaut, sodass auch die magnetische Feldstärke des Erregerfelds rasch verringert wird.

Die Erfindung sieht vor, dass die Sollspannung einer Quellenspannung entspricht und die größer gewählte Spannung mittels eines Spannungswandlers bereitgestellt wird. Die Synchronmaschine wird unter Verwendung von elektrischem Strom betrieben, welcher mittels einer Stromquelle bereitgestellt wird. Als Stromquelle wird beispielsweise eine Kraftfahrzeugbatterie, insbesondere eine Hochvoltbatterie, verstanden. Selbstverständlich kann die zum Betreiben der Synchronmaschine verwendete elektrische Energie alternativ mittels eines Generators, einer Brennstoffzelle oder dergleichen bereitgestellt werden. Die von der Stromquelle bereitgestellte Spannung wird als Quellenspannung bezeichnet. Alternativ kann auch die an Stromanschlüssen der Synchronmaschine anliegende Spannung als Quellenspannung bezeichnet werden.

Die Sollspannung soll nun der Quellenspannung entsprechen, wohingegen die zum Aufbauen des Erregerfelds an der Erregerwicklung angelegte Spannung größer ist und mittels des Spannungswandlers erzeugt wird, nämlich aus der Quellenspannung. Mithilfe des Spannungswandlers wird insoweit die Quellenspannung auf die höhere Spannung gewandelt. Eine derartige Vorgehensweise hat den Vorteil, dass während des bestimmungsgemäßen Betriebs der Synchronmaschine nach dem Aufbauen des Erregerfelds ein hoher Wirkungsgrad erzielt wird, weil der Spannungswandler nicht mehr benötigt wird. Der Spannungswandler, an welchem Wandlerverluste anfallen können, wird hingegen lediglich zum Aufbauen des Erregerfelds und/oder zum Abbauen des Erregerfelds betrieben. Der Spannungswandler kann grundsätzlich beliebig ausgestaltet sein, er liegt jedoch in jedem Fall als Gleichspannungswandler vor. Besonders bevorzugt ist der Spannungswandler als Ladungspumpe, als Aufwärtswandler, als Inverswandler oder als Synchronwandler ausgestaltet. Auch andere Ausführungsformen können jedoch umgesetzt werden.

Im Rahmen einer weiteren bevorzugten Ausgestaltung der Erfindung kann vorgesehen sein, dass die größere Spannung um mindestens einen ganzzahligen Faktor größer gewählt wird als die Sollspannung. Um das Erregerfeld besonders rasch aufzubauen oder abzubauen, wird die an der Erregerwicklung angelegte elektrische Spannung bezogen auf die Sollspannung deutlich vergrößert. Beispielsweise ist die verwendete Spannung um einen Faktor von mindestens 2, mindestens 3, mindestens 4, mindestens 5 oder mindestens 10 größer als die Sollspannung. Diese größere Spannung wird vorzugsweise mittels des Spannungswandlers bereitgestellt. Die hierbei anfallenden Verluste werden in Kauf genommen, um das Ansprechverhalten der Antriebseinrichtung zu verbessern. Die Verwendung einer Spannung in der genannten Größenordnung ermöglicht ein besonders schnelles Aufbauen beziehungsweise Abbauen des Erregerfelds. Auch andere Spannungen können jedoch gewinnbringend verwendet werden. Beispielsweise kann auch ein Verlauf der Spannung über der Zeit vorgegeben werden, insbesondere ein linearer Verlauf.

Eine weitere bevorzugte Ausführungsform der Erfindung sieht vor, dass die Spannung größer gewählt wird, bis das Erregerfeld vollständig aufgebaut ist. In anderen Worten wird die Spannung während des Aufbaus des Erregerfelds durchgehend größer gewählt und erst nach dem vollständigen Aufbauen des Erregerfelds in Richtung der Sollspannung abgesenkt. Es kann jedoch auch vorgesehen sein, dass die Spannung ausgehend von der größer gewählten Spannung umso weiter abgesenkt wird, je weiter das Erregerfeld aufgebaut ist. Beispielsweise wird die an der Erregerwicklung angelegte elektrische Spannung derart gewählt, dass sie zu Beginn des Aufbaus des Erregerfelds ihren größten Wert aufweist und in dem Zeitpunkt, in welchem das Erregerfeld vollständig aufgebaut ist, die Sollspannung erreicht.

Beispielsweise wird während des Aufbauens des Erregerfelds die an der Erregerwicklung anliegende elektrische Spannung entsprechend eines bestimmten Spannungsverlaufs über der Zeit eingestellt. Dieser Spannungsverlauf kann einen linearen oder schrittweisen Abfall der Spannung vorsehen. Eine derartige Vorgehensweise ermöglicht einen raschen Aufbau des Erregerfelds und zum anderen die Verringerung der hierbei anfallenden elektrischen Verluste.

Eine bevorzugte Ausführungsform der Erfindung sieht vor, dass die Spannung größer gewählt wird, bis eine Stromstärke von in der Erregerwicklung fließendem elektrischem Strom eine bestimmte Sollstromstärke erreicht hat. Die Stromstärke ist ein Maß für die magnetische Feldstärke der Erregerwicklung, insbesondere ist die Feldstärke proportional zu der Stromstärke. Die Feldstärke entspricht üblicherweise dem Produkt aus Stromstärke und Wicklungsanzahl. Während eines bestimmungsgemäßen Betriebs der Synchronmaschine, insbesondere während eines Dauerbetriebs der Synchronmaschine, soll die Stromstärke der Sollstromstärke entsprechen. Vorzugsweise wird die Stromstärke herangezogen, um festzustellen, ob das Erregerfeld bereits vollständig aufgebaut wurde. Dies ist der Fall, wenn die Stromstärke der Sollstromstärke entspricht.

Das bedeutet schlussendlich, dass die Spannung so lange größer gewählt und eingestellt wird, wie die Stromstärke kleiner ist als die Sollstromstärke. Erreicht die Stromstärke die Sollstromstärke oder überschreitet diese sogar, so wird die an der Erregerwicklung angelegte Spannung in Richtung der Sollspannung abgesenkt. Es kann zudem vorgesehen sein, die an der Erregerwicklung angelegte elektrische Spannung in Abhängigkeit von der momentanen Stromstärke beziehungsweise dem Verhältnis der Stromstärke zu der Sollstromstärke zu ermitteln. Beispielsweise wird die elektrische Spannung umso grö-βer gewählt, je kleiner die Stromstärke ist. Die Verwendung der Stromstärke als Indikator für die magnetische Feldstärke hat den Vorteil, dass das Aufbauen des Erregerfelds bedarfsgerecht erfolgen kann.

Im Rahmen einer weiteren Ausführungsform der Erfindung kann vorgesehen sein, dass zum Abbauen des Erregerfelds die Erregerwicklung zeitweise umgepolt wird, wobei die Spannung bei dem Umpolen der Sollspannung entspricht oder größer gewählt wird als die Sollspannung. Es kann also zum einen vorgesehen sein, dass zum Abbauen des Erregerfelds die Erregerwicklung einfach umgepolt wird, sodass an ihr die Sollspannung anliegt, jedoch mit umgekehrtem Vorzeichen als vor dem Abbauen. Besonders bevorzugt ist es jedoch vorgesehen, die Spannung während des Umpolens größer zu wählen beziehungsweise einzustellen als die Sollspannung.

Die Vorgehensweise bei dem Abbau des Erregerfelds entspricht insoweit der Vorgehensweise zum Aufbauen des Erregerfelds, wobei jedoch zusätzlich das Umpolen der Erregerwicklung erfolgt. Beispielsweise ist es vorgesehen, die größere Spannung mittels des Spannungswandlers bereitzustellen, welcher bevorzugt ebenfalls für das Aufbauen des Erregerfelds zur Spannungserhöhung herangezogen wird. Bereits durch das einfache Umpolen der Erregerwicklung kann ein äußerst rascher Abbau des Erregerfelds realisiert werden. Durch das gleichzeitige Vergrößern der Spannung über die Sollspannung hinaus wird die Geschwindigkeit des Abbauens des Erregerfelds noch erhöht.

Eine bevorzugte Weiterbildung der Erfindung sieht vor, dass die größere Spannung zum Abbauen des Erregerfelds durch umgepoltes elektrisches Verbinden des Spannungswandlers mit der Erregerwicklung an der Erregerwicklung angelegt wird. Der Spannungswandler ist elektrisch mit der Erregerwicklung verbunden. Diese elektrische Verbindung kann nun umgepolt werden, sodass der Spannungswandler zum einen zum Aufbauen des Erregerfelds und zum anderen zum Abbauen des Erregerfelds die größere Spannung bereitgestellt und an der Erregerwicklung angelegt werden kann. Entsprechend ist lediglich der eine Spannungswandler notwendig, um sowohl das Aufbauen als auch das Abbauen des Erregerfelds zu beschleunigen.

Eine weitere Ausgestaltung der Erfindung sieht vor, dass das Umpolen durchgeführt wird, bis das Erregerfeld vollständig abgebaut ist. Analog zu der vorstehend beschriebenen Vorgehensweise für das Aufbauen des Erregerfelds, soll auch das Abbauen des Erregerfelds beschleunigt erfolgen, bis es vollständig abgebaut ist, seine magnetische Feldstärke also der Feldstärke einer deaktivierten Synchronmaschine entspricht, insbesondere gleich null oder zumindest nahezu gleich null ist. Um Fehlfunktionen der Synchronmaschine beziehungsweise der Antriebseinrichtung, insbesondere eine Drehrichtungsumkehr der Synchronmaschine, zu vermeiden, wird das Umpolen in dem Zeitpunkt beendet, in welchem das Erregerfeld vollständig abgebaut ist. Insbesondere wird zu diesem Zeitpunkt die elektrische Spannung auf null gesetzt, sodass nachfolgend das Erregerfeld eine konstante Feldstärke, vorzugsweise eine Feldstärke von null, aufweist.

Schließlich kann im Rahmen einer weiteren Ausgestaltung der Erfindung vorgesehen sein, dass das Umpolen durchgeführt wird, bis die Stromstärke des in der Erregerwicklung fließenden Stroms eine bestimmte Schwellenstromstärke unterschritten hat. Vorstehend wurde bereits für das Aufbauen des Erregerfelds erläutert, dass die Stromstärke ein Maß für die magnetische Feldstärke des Erregerfelds ist. Erreicht oder unterschreitet die Stromstärke die Schwellenstromstärke, so wird davon ausgegangen, dass das Erregerfeld vollständig abgebaut ist. Entsprechend wird das Umpolen zu dem Zeitpunkt eingestellt beziehungsweise beendet, in welchem die Stromstärke die Schwellenstromstärke erreicht oder unterschreitet. Die Schwellenstromstärke kann grundsätzlich beliebig gewählt sein. Besonders bevorzugt ist sie gleich null oder nahezu gleich null. Die Verwendung der Stromstärke als Maß für die magnetische Feldstärke hat wiederum den Vorteil, dass das Umpolen zielgerichtet bis zum vollständigen Abbau des Erregerfelds vorgenommen werden kann.

Die Erfindung betrifft weiterhin eine Antriebseinrichtung für ein Kraftfahrzeug, insbesondere eine Antriebseinrichtung zur Durchführung des Verfahrens gemäß den Ausführungen im Rahmen dieser Beschreibung, wobei die Antriebseinrichtung eine fremderregte elektrische Synchronmaschine zum Bereitstellen eines Antriebsdrehmoments aufweist und zum Erzeugen eines Erregerfelds eine elektrische Spannung an einer Erregerwicklung der Synchronmaschine anlegbar ist, wobei die Antriebseinrichtung dazu ausgebildet ist, zum Aufbauen des Erregerfelds die an der Erregerwicklung angelegte Spannung zeitweise größer zu wählen als eine Sollspannung und nach dem Aufbauen des Erregerfelds die Spannung in Richtung der Sollspannung abzusenken, wobei die größer gewählte Spannung mittels eines Spannungswandlers bereitgestellt wird. Dabei ist vorgesehen, dass die Sollspannung einer Quellenspannung entspricht.

Auf die Vorteile einer derartigen Vorgehensweise beziehungsweise einer derartigen Ausgestaltung der Antriebseinrichtung wurde bereits hingewiesen. Sowohl die Antriebseinrichtung als auch das Verfahren zu ihrem Betreiben können gemäß den Ausführungen im Rahmen dieser Beschreibung weitergebildet sein, sodass insoweit auf diese verwiesen wird.

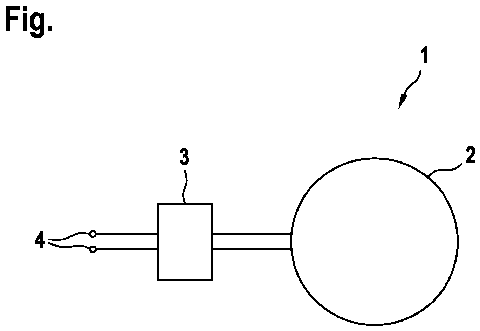

Die Erfindung wird nachfolgend anhand der in der Zeichnung dargestellten Ausführungsbeispiele näher erläutert, ohne dass eine Beschränkung erfolgt. Dabei zeigt die einzige
- Figur: eine schematische Darstellung einer Antriebseinrichtung für ein Kraftfahrzeug, mit einer fremderregten elektrischen Synchronmaschine.

Die Figur zeigt eine sehr schematische Darstellung einer Antriebseinrichtung 1 für ein nicht näher dargestelltes Kraftfahrzeug. Die Antriebseinrichtung 1 verfügt über eine fremderregte elektrische Synchronmaschine 2, die über ein Steuergerät 3 an Stromanschlüsse 4 angeschlossen ist. An den Stromanschlüssen 4 wird elektrischer Strom bereitgestellt, insbesondere ein Gleichstrom bei einer Quellenspannung. Die Synchronmaschine 2 weist einen Rotor sowie einen Stator auf, wobei ersterer über eine Erregerwicklung verfügt, mittels welcher ein Erregerfeld erzeugt werden kann.

Zum Erzeugen des Erregerfelds wird eine elektrische Spannung an der Erregerwicklung angelegt. Dies wird mittels des Steuergeräts 3 gesteuert. Beispielsweise verbindet das Steuergerät 3 die Erregerwicklung mit den Stromanschlüssen 4, sodass die an der Erregerwicklung anliegende elektrische Spannung der Quellenspannung entspricht. Vorzugweise ist eine Sollspannung der Synchronmaschine, insbesondere der Erregerwicklung, gleich der Quellenspannung.

Um das Aufbauen des Erregerfelds zu beschleunigen, soll während des Aufbauens des Erregerfelds die an der Erregerwicklung angelegte Spannung zumindest zeitweise, insbesondere durchgehend, größer sein als die Sollspannung und mithin bevorzugt auch größer als die Quellenspannung. Hierzu weist das Steuergerät 3 einen Spannungswandler auf, mittels welchem die Erregerwicklung während des Aufbauens des Erregerfelds mit einer Spannung beaufschlagt wird, die größer ist als die Sollspannung.

Ist das Erregerfeld aufgebaut, wird die an der Erregerwicklung anliegende elektrische Spannung in Richtung der oder auf die Sollspannung abgesenkt. Beispielsweise wird hierzu die Stromstärke des durch die Erregerwicklung fließenden elektrischen Stroms überwacht. Solange die Stromstärke kleiner ist als eine bestimmte Sollstromstärke, wird die größere Spannung an der Erregerwicklung eingestellt beziehungsweise angelegt. Erreicht die Stromstärke die Sollstromstärke, so wird die an der Erregerwicklung anliegende elektrische Spannung verringert, nämlich in Richtung der oder bis auf die Sollspannung. Nachfolgend wird die Synchronmaschine zum Bereitstellen eines Antriebsdrehmoments der Antriebseinrichtung 1 herangezogen.

Soll das Erregerfeld abgebaut werden, beispielsweise zum Deaktivieren der Synchronmaschine, welches im Zuge eines Abstellen des Kraftfahrzeugs erfolgen kann, so wird zum Beschleunigen des Abbauens die Erregerwicklung zumindest zeitweise umgepolt, vorzugsweise durchgehend bis zum vollständigen Abbauen des Erregerfelds. Das Umpolen erfolgt bevorzugt ebenfalls mithilfe des Steuergeräts 3, wozu dieses entsprechend ausgestaltet ist. Beispielsweise wird die Erregerwicklung umgepolt, bis die Stromstärke des in der Erregerwicklung fließenden Stroms eine bestimmte Schwellenstromstärke erreicht oder unterschritten hat.

Entspricht die Stromstärke der Schwellenstromstärke oder ist sogar kleiner als diese, so wird das Umpolen eingestellt und vorzugsweise die Erregerwicklung von den Stromanschlüssen 4 getrennt, sodass das Erregerfeld bis zum nächsten Aufbau eine Feldstärke von null oder zumindest von nahezu null aufweist. Besonders bevorzugt kann es vorgesehen sein, während des Umpolens der Erregerwicklung zusätzlich eine größere Spannung an der Erregerwicklung anzulegen, um das Erregerfeld noch schneller abzubauen.

Die beschriebene Antriebseinrichtung 1 hat den Vorteil, dass trotz der Verwendung der fremderregten elektrischen Synchronmaschine ein gutes Ansprechverhalten erzielt wird. Insbesondere weist die Antriebseinrichtung 1 ein Ansprechverhalten auf, welches dem Ansprechverhalten einer Antriebseinrichtung 1 entspricht, welche über eine permanenterregte Synchronmaschine oder eine Asynchronmaschine verfügt.

## Patentansprüche

1. Verfahren zum Betreiben einer Antriebseinrichtung (1) für ein Kraftfahrzeug, wobei die Antriebseinrichtung (1) eine fremderregte elektrische Synchronmaschine (2) zum Bereitstellen eines Antriebsdrehmoments aufweist und zum Erzeugen eines Erregerfelds eine elektrische Spannung an einer Erregerwicklung der Synchronmaschine (2) angelegt wird, wobei zum Aufbauen des Erregerfelds die an der Erregerwicklung angelegte Spannung zeitweise größer gewählt wird als eine Sollspannung und nach dem Aufbauen des Erregerfelds die Spannung in Richtung der Sollspannung abgesenkt wird, wobei die größer gewählte Spannung mittels eines Spannungswandlers bereitgestellt wird, **dadurch gekennzeichnet, dass** die Sollspannung einer Quellenspannung entspricht.

2. Verfahren nach einem der vorhergehenden Ansprüche, **dadurch gekennzeichnet, dass** die größere Spannung um mindestens einen ganzzahligen Faktor größer gewählt wird als die Sollspannung.

3. Verfahren nach einem der vorhergehenden Ansprüche, **dadurch gekennzeichnet, dass** die Spannung größer gewählt wird, bis das Erregerfeld vollständig aufgebaut ist.

4. Verfahren nach einem der vorhergehenden Ansprüche, **dadurch gekennzeichnet, dass** die Spannung größer gewählt wird, bis eine Stromstärke von in der Erregerwicklung fließenden elektrischem Strom eine bestimmte Sollstromstärke erreicht hat.

5. Verfahren nach einem der vorhergehenden Ansprüche, **dadurch gekennzeichnet, dass** zum Abbauen des Erregerfelds die Erregerwicklung zeitweise umgepolt wird, wobei die Spannung bei dem Umpolen der Sollspannung entspricht oder größer gewählt wird als die Sollspannung.

6. Verfahren nach einem der vorhergehenden Ansprüche, **dadurch gekennzeichnet, dass** die größere Spannung zum Abbauen des Erregerfelds durch umgepoltes elektrisches Verbinden des Spannungswandlers mit der Erregerwicklung an der Erregerwicklung angelegt wird.

7. Verfahren nach Anspruch 5 oder 6, **dadurch gekennzeichnet, dass** das Umpolen durchgeführt wird, bis das Erregerfeld vollständig abgebaut ist.

8. Verfahren nach einem der Ansprüche 5 bis 7, **dadurch gekennzeichnet, dass** das Umpolen durchgeführt wird, bis die Stromstärke des in der Erregerwicklung fließenden Stroms eine bestimmte Schwellenstromstärke unterschritten hat.

9. Antriebseinrichtung (1) für ein Kraftfahrzeug, insbesondere zur Durchführung des Verfahrens nach einem oder mehreren der vorhergehenden Ansprüche, wobei die Antriebseinrichtung (1) eine fremderregte elektrische Synchronmaschine (2) zum Bereitstellen eines Antriebsdrehmoments aufweist und zum Erzeugen eines Erregerfelds eine elektrische Spannung an einer Erregerwicklung der Synchronmaschine (2) anlegbar ist, wobei die Antriebseinrichtung (1) dazu ausgebildet ist, zum Aufbauen des Erregerfelds die an der Erregerwicklung angelegte Spannung zeitweise größer zu wählen als eine Sollspannung und nach dem Aufbauen des Erregerfelds die Spannung in Richtung der Sollspannung abzusenken, wobei die größer gewählte Spannung mittels eines Spannungswandlers bereitgestellt wird, **dadurch gekennzeichnet, dass** die Sollspannung einer Quellenspannung entspricht.

## Claims

1. Method for operating a drive device (1) for a motor vehicle, wherein the drive device (1) has an externally excited electrical synchronous machine (2) for providing a drive torque and for generating an excitation field an electrical voltage is applied to an excitation winding of the synchronous machine (2), wherein for building up the excitation field the voltage applied to the excitation winding is selected to be temporarily greater than a target voltage and after the building-up of the excitation field the voltage is lowered in the direction of the target voltage, wherein the voltage selected to be greater is provided by means of a voltage converter, **characterised in that** the target voltage is equal to a source voltage.

2. Method according to any of the preceding claims, **characterised in that** the greater voltage is selected to be greater than the target voltage by at least an integer factor.

3. Method according to any of the preceding claims, **characterised in that** the voltage is selected to be greater until the excitation field is completely built up.

4. Method according to any of the preceding claims, **characterised in that** the voltage is selected to be greater until a current strength of electrical current flowing in the excitation winding has reached a specified target current strength.

5. Method according to any of the preceding claims, **characterised in that** for degrading the excitation field the excitation winding has its polarity temporarily reversed, wherein at the polarity reversal the voltage is equal to the target voltage or is selected to be greater than the target voltage.

6. Method according to any of the preceding claims, **characterised in that** the greater voltage for degrading the excitation field is applied to the excitation winding by a pole-reversed electrical connection of the voltage converter with the excitation winding.

7. Method according to claim 5 or 6, **characterised in that** the polarity reversal carried out until the excitation field is completely degraded.

8. Method according to any of claims 5 to 7, **characterised in that** the polarity reversal is carried out until the current strength of the current flowing in the excitation winding has undershot a specified threshold current strength.

9. Drive device (1) for a motor vehicle, in particular for carrying out the method according to one or more of the preceding claims, wherein the drive device (1) has an externally excited electrical synchronous machine (2) for providing a drive torque and for generating an excitation field an electrical voltage can be applied to an excitation winding of the synchronous machine (2), wherein the drive device (1) is configured, for building up the excitation field, to select the voltage applied to the excitation winding to be temporarily greater than a target voltage and after the building-up of the excitation field to lower the voltage in the direction of the target voltage, wherein the voltage selected to be greater is provided by means of a voltage converter, **characterised in that** the target voltage is equal to a source voltage.

## Revendications

1. Procédé pour faire fonctionner un dispositif d'entraînement (1) pour un véhicule automobile, dans lequel le dispositif d'entraînement (1) présente un moteur électrique synchrone (2) à excitation séparée pour fournir un couple d'entraînement et, pour générer un champ d'excitation, une tension électrique est appliquée à un enroulement d'excitation de le moteur synchrone (2), dans lequel, pour établir le champ d'excitation, la tension appliquée à l'enroulement d'excitation est choisie temporairement supérieure à une tension de consigne et, après l'établissement du champ d'excitation, la tension est abaissée en direction de la tension de consigne, dans lequel la tension choisie supérieure est mise à disposition au moyen d'un transformateur de tension, **caractérisé en ce que** la tension de consigne correspond à une tension de source.

2. Procédé selon l'une quelconque des revendications précédentes, **caractérisé en ce que** la plus grande tension est choisie supérieure à la tension de consigne d'au moins un facteur entier.

3. Procédé selon l'une quelconque des revendications précédentes, **caractérisé en ce que** la tension est choisie plus grande jusqu'à ce que le champ d'excitation soit complètement établi.

4. Procédé selon l'une quelconque des revendications précédentes, **caractérisé en ce que** la tension est choisie plus grande jusqu'à ce qu'une intensité de courant électrique circulant dans l'enroulement d'excitation atteigne une intensité de courant de consigne déterminée.

5. Procédé selon l'une quelconque des revendications précédentes, **caractérisé en ce que**, pour réduire le champ d'excitation, la polarité de l'enroulement d'excitation est temporairement inversée, dans lequel la tension lors de l'inversion de polarité correspond à la tension de consigne ou est choisie supérieure à la tension de consigne.

6. Procédé selon l'une quelconque des revendications précédentes, **caractérisé en ce que** la tension plus élevée pour supprimer le champ d'excitation est appliquée à l'enroulement d'excitation en inversant la polarité de la connexion électrique du transformateur de tension à l'enroulement d'excitation.

7. Procédé selon la revendication 5 ou 6, **caractérisé en ce que** l'inversion de polarité est effectuée jusqu'à ce que le champ d'excitation soit complètement dissipé.

8. Procédé selon l'une quelconque des revendications 5 à 7, **caractérisé en ce que** l'inversion de polarité est effectuée jusqu'à ce que l'intensité du courant circulant dans l'enroulement d'excitation soit inférieure à une intensité de courant seuil déterminée.

9. Dispositif d'entraînement (1) pour un véhicule automobile, en particulier pour la mise en oeuvre du procédé selon l'une quelconque ou plusieurs des revendications précédentes, dans lequel le dispositif d'entraînement (1) présente un moteur électrique synchrone (2) à excitation séparée destiné à fournir un couple d'entraînement et une tension électrique peut être appliquée à un enroulement d'excitation du moteur synchrone (2) pour générer un champ d'excitation, dans lequel le dispositif d'entraînement (1) est conçu pour sélectionner temporairement une tension appliquée à l'enroulement d'excitation supérieure à une tension de consigne pour établir le champ d'excitation et pour abaisser la tension en direction de la tension de consigne après l'établissement du champ d'excitation, dans lequel la tension sélectionnée supérieure est mise à disposition au moyen d'un convertisseur de tension, **caractérisé en ce que** la tension de consigne correspond à une tension de source.
